# FASCICULE DE BREVET EUROPEEN

(11) **EP 0 575 214 B1**
(45) Date de publication et mention de la délivrance du brevet: **04.03.1998**
(21) Numéro de dépôt: 93401388.9
(22) Date de dépôt: 01.06.1993
(51) Int. Cl.: H04B 1/08, H05K 5/00

(54) **Appareil électronique transformable pour montage mural ou en baie**
Umstellbares elektronisches Gerät zur Montage in Wand oder in Gestellrahmen
Transformable electronic apparatus for wall- or rack-mounting

(30) Priorité: 04.06.1992 FR 9206776
(43) Date de publication de la demande: 22.12.1993
(73) Titulaire: ALCATEL ALSTHOM COMPAGNIE GENERALE D'ELECTRICITE, 75008 Paris (FR)
(72) Inventeur: Reze, Yannick, F-53100 Mayenne (FR)
(74) Mandataire: Pothet, Jean Rémy Emile Ludovic

(56) Documents cités:
- DE-U- 8 535 798
- US-A- 4 084 214
- US-A- 4 964 018

## Description

La présente invention a pour objet un appareil électronique destiné à être utilisé, à volonté, soit en montage mural, soit en montage en baie. L'invention s'applique, plus particulièrement, au cas où ledit appareil consiste en un relais radio, mais elle n'est pas limitée à un tel cas.

L'invention vise notamment à apporter une solution au problème qui se pose lors de l'installation d'ensemble regroupant une pluralité d'appareils électroniques identiques ou similaires, en particulier lors de l'extension de réseaux radio.

Lors de la création d'un réseau radio, il suffit parfois d'utiliser un seul relais monté en position murale. Toutefois, lorsque le réseau doit être étendu ultérieurement à sa création, il est quelquefois nécessaire d'ajouter des unités radio et l'on regroupe alors l'ensemble de ces unités dans une baie dans laquelle chaque unité radio est montée dans un tiroir.

Il est donc nécessaire, dans un tel cas, de réaliser une transformation du relais permettant de passer de la configuration du boîtier qui convient pour le montage en position murale en une configuration appropriée au montage en baie. Plus précisement, il s'agit de passer d'une configuration dans laquelle les éléments dits d"'interface" entre l'appareil et ses utilisateurs, ces éléments étant par exemple constitués par des écrans d'affichage, des claviers de commande, qui se trouvent sur la face frontale de l'appareil qui correspond à une grande face du boîtier de celui-ci, à une configuration dans laquelle ces mêmes éléments d'interface se trouvent sur la plus petite des faces de ce boîtier.

L'invention a donc pour but de permettre d'effectuer une telle transformation de la configuration d'un appareil électronique, et notamment d'un relais radio, de manière simple et rapide afin de diminuer le temps nécessaire pour cette transformation ainsi que d'en réduire le coût.

L'invention propose donc un appareil électronique destiné à être utilisé, à volonté, soit en montage mural, soit en montage en baie, comprenant une première unité contenue dans un premier boîtier et une seconde unité contenu dans un second boîtier, l'appareil étant de forme parallèlépipédique rectangle et les unités étant séparables et réassemblables entre elles, le premier boîtier comportant un logement lui permettant de recevoir, de manière amovible, le second boîtier et lesdits boîtiers étant dotés de moyens leur permettant de se relier électriquement.

Un tel arrangement est déjà décrit dans le document DE-U-8 535 798 qui fait état d'un appareil destiné à un montage en baie comprenant deux unités séparables présentant les caractéristiques indiquées ci-dessus.

Selon l'invention, le second boîtier possède une face latérale, éventuellement constituée par un côté du boîtier prolongé par une paroi en porte à faux, et une face frontale de forme rectangle identique. Ce second boîtier se positionne dans le logement du premier boîtier, soit de manière que, dans une première position, la face frontale de ce second boîtier soit dans le plan d'une grande face du premier boîtier en occupant complètement une ouverture du logement qui est prévue dans cette grande face du premier boîtier, la face latérale du second boîtier, venant fermer une ouverture du logement qui est prévue dans une petite face latérale du premier boîtier, soit de manière que, dans une seconde position, la face frontale du second boîtier occupe complètement l'ouverture du logement prévue dans la petite face latérale du premier boîtier, dans le plan de laquelle elle est alors située, la face latérale du second boîtier venant alors fermer l'ouverture du logement prévue dans la grande face du premier boîtier, et lesdits moyens permettant de relier électriquement lesdits boîtiers permettent cette liaison électrique dans chacune desdites première et seconde positions relatives du second boîtier par rapport au premier boîtier.

Selon une caractéristique avantageuse de l'invention, la seconde unité, dite relationnelle, comporte en face frontale dudit second boîtier des éléments d'interface et de liaison électrique de l'appareil avec les utilisateurs, tels qu'un clavier de commande, un écran d'affichage d'indications, une liaison avec un combiné acoustique ou un micro. La première unité, dite fonctionnelle, comporte les organes, ou éléments fonctionnels de l'appareil ainsi que les éléments permettant d'assurer la liaison électrique de celui-ci avec d'autres organes et/ou appareils placés à l'extérieur du premier boîtier, à l'exception des éléments de liaison électrique entre l'appareil et les utilisateurs que comporte la face frontale du second boîtier. Ainsi l'invention est fondée sur le principe de la séparation de l'appareil en deux unités distinctes, constituant avantageusement, d'une part, une unité fonctionnelle et, d'autre part, une unité relationnelle, logées chacune dans son propre boîtier, le boîtier de l'unité fonctionnelle présentant un logement pour recevoir de manière amovible celui de l'unité relationnelle et ce logement ainsi que cette dernière unité, étant agencés de manière à permettre de réaliser l'une ou l'autre des configurations de l'appareil qui conviennent au montage mural ou au montage en baie, en changeant simplement la position relative des boîtiers des deux unités.

L'invention sera mieux comprise grace à la description détaillée qui va suivre, d'une forme d'exécution de l'appareil, ainsi que de la manière de procéder à la transformation de cette forme d'exécution pour passer de la configuration convenant au montage mural à celle qui est appropriée au montage en baie, cette description étant faite à titre d'exemple non limitatif, en se référant au dessin annexé, dans lequel :
La Fig. 1 représente l'appareil selon sa configuration appropriée au montage mural;
La Fig. 2 montre la manière dont on réalise l'assemblage des deux unités composant l'appareil pour obtenir la configuration illustrée à la Fig. 1;
Les Figs. 3 à 5 montrent respectivement une première, une deuxième et une troisième étape de la transformation de l'appareil pour passer de la configuration convenant au montage mural à celle qui est appropriée au montage en baie; et
La Fig. 6 illustre une présentation particulière de l'appareil dans la configuration de montage en baie.

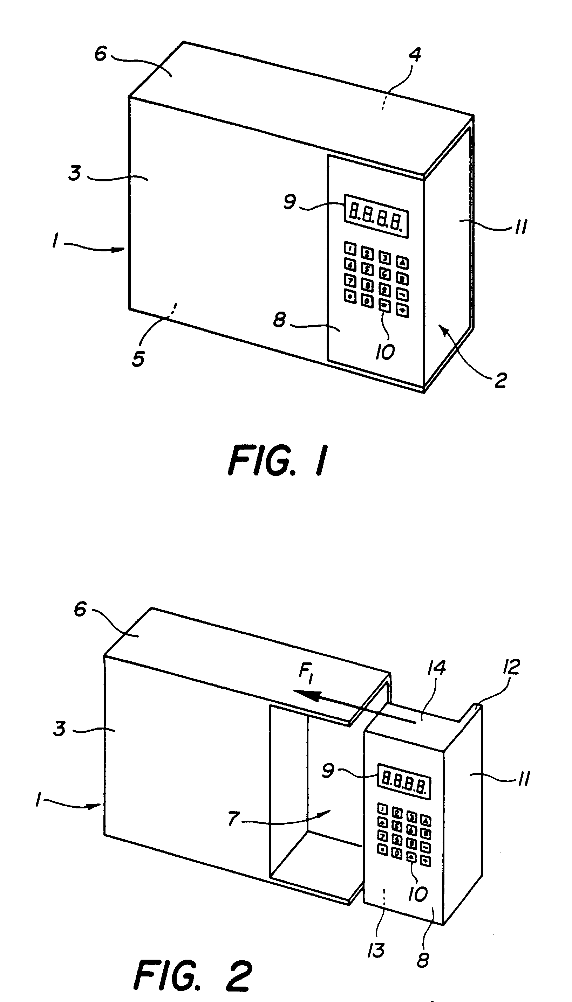

Comme on le voit à la Fig. 1, l'ensemble de l'appareil apparaît comme étant logé dans un seul boîtier 1 ayant la forme d'un parallélépipède rectangle. La Fig. 1 montre l'appareil avec sa face frontale 3, qui constitue l'une des deux faces principales du boîtier 1, tournée vers l'avant et sa face arrière 4, qui constitue l'autre face principale de ce même boîtier, tournée vers l'arrière.

La base du boîtier 1 est constituée par une face rectangulaire allongée 5, tournée vers le bas, et le dessus du boîtier 1 est constitué par la face 6 opposée à la face 5.

Comme cela apparaît mieux à la Fig. 2, le boîtier 1 contient, en fait, une unité dite "fonctionnelle", comme mentionné plus haut, et une unité dite "relationnelle" contenue dans un deuxième boîtier 2 ayant également sensiblement la forme d'un parallélépipède rectangle, distinct du boîtier 1 et de dimensions inférieures à celles de ce dernier.

Le boîtier 2 est logé de manière amovible dans un logement 7 ménagé dans le boîtier 1. L'introduction du boîtier 2 dans le logement 7, en vue de la réalisation de la configuration de montage mural représentée à la Fig. 1 est effectuée par translation dans le sens de la flèche F₁, comme illustré à la Fig. 2.

Plus précisément, dans la configuration des Figs. 1 et 2, le boîtier 2 est logé dans le compartiment 7 de façon telle que la face frontale 8 du boîtier 2 sur laquelle se trouve un écran d'affichage 9 et un clavier de commandes 10, est dans le plan de la face frontale 3 du boîtier 1, en occupant complètement la surface correspondant à l'ouverture du compartiment 7 dans cette dernière face.

D'autre part, on voit que la face latérale 11 du boîtier 2 vient fermer la totalité de l'ouverture du compartiment 7 dans la face latérale droite du boîtier 1, comme illustré à la Fig. 1.

Il est à remarquer que, dans la forme d'exécution représentée au dessin, ladite face latérale 11 du boîtier 2 est partiellement constituée par une paroi 12 en porte à faux qui prolonge le côté correspondant du boîtier parallélépipèdique 2, de façon telle que la forme de cette face latérale 11 soit identique à celle de la face frontale 8 du boîtier 2. Cette dernière condition doit être remplie pour permettre d'atteindre le résultat visé par l'invention, mais la paroi 12 pourrait également ne pas être en porte à faux, la base 13 du boîtier 2, de même que sa face supérieure 14, ayant alors la forme d'un carré.

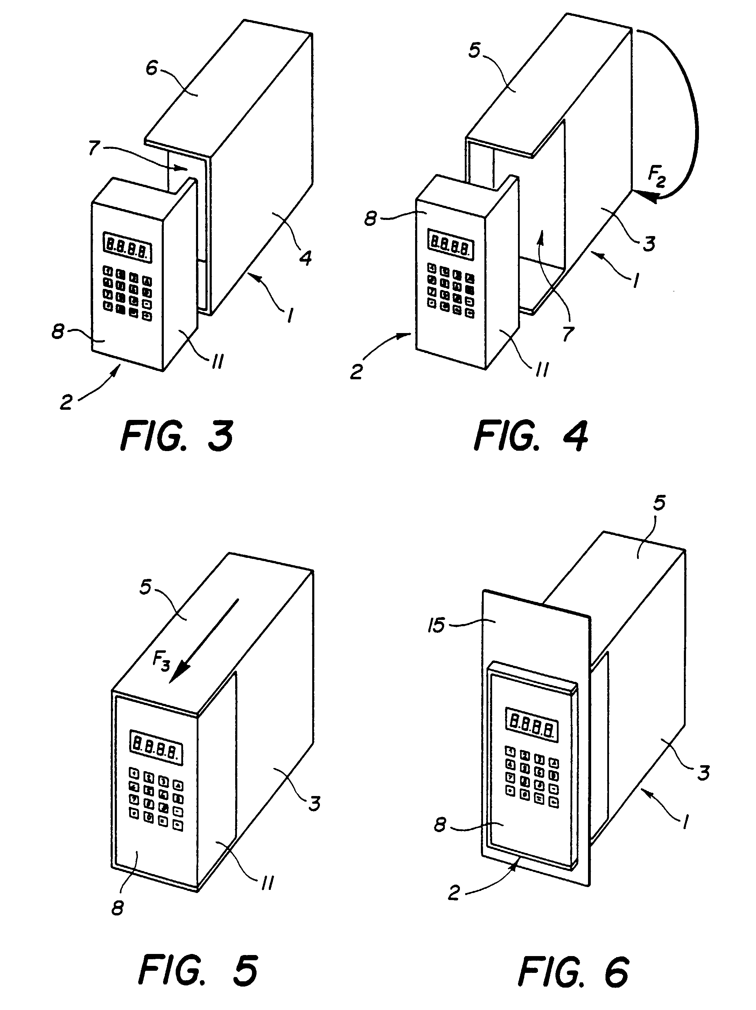

Pour passer de la configuration convenant au montage mural à celle appropriée pour le montage en baie, il suffit de faire pivoter le boîtier 1 autour d'un axe parallèle à sa longueur, de façon à le faire passer de la position représentée à la Fig. 3 (qui est la même que celle de la Fig. 2, mais vue sous un angle faisant apparaître la face arrière 4 du boîtier 1) à celle de la Fig. 4, c'est-à-dire de faire subir une rotation de 180° au boîtier 1, comme indiqué par la flèche F₂ à la figure 4, la base 5 venant alors en position tournée vers le haut, tout en plaçant le boîtier 2 en position telle que sa face frontale 8 soit placée en position correspondant à l'ouverture latérale du compartiment 7.

A cet effet, on peut, bien entendu, soit retirer le boîtier 2 du compartiment 7 avant de faire pivoter le boîtier 1, comme illustré aux Figs. 3 et 4, soit le retirer du compartiment 7 après pivotement du boîtier 1 et le replacer ensuite dans la position illustrée à la Fig. 4, par rapport au boîtier 1.

Après quoi, la configuration convenant pour le montage de l'appareil en baie peut être obtenue en introduisant le boîtier 2 dans le compartiment 7, par simple translation relative des boîtiers 1 et 2 dans le sens indiqué par la flèche F₃ à la Fig. 5.

Comme on le voit à la Fig. 6, il est possible, dans la configuration de montage en baie, de munir l'appareil d'une façade 15 pour terminer l'habillage frontal de la baie.

La liaison électrique entre le premier et le second boîtier est assurée par des moyens (non représentés) de type connu, par exemple par un cordon souple muni, au moins à l'une de ses extrémités, d'une fiche coopérant avec une prise correspondante ménagée dans une face intérieure du compartiment 7 et dans la face du boîtier 2 opposée à sa face frontale 8.

Comme on le voit d'après la description qui précède, le résultat visé par l'invention peut être obtenu de manière particulièrement simple et rapide.

## Revendications

1. Appareil électronique destiné à être utilisé, à volonté, soit en montage mural, soit en montage en baie, comprenant une première unité contenue dans un premier boîtier (1) et une seconde unité contenue dans un second boîtier (2), l'appareil étant de forme parallèlépipèdique rectangle et les unités étant séparables et réassemblables entre elles, le premier boîtier (1) comportant un logement (7) lui permettant de recevoir, de manière amovible, le second boîtier (2) et lesdits boîtiers (1, 2) étant dotés de moyens leur permettant de se relier électriquement, caractérisé en ce que le second boîtier (2) possède une face latérale (11), éventuellement constituée par un côté du boîtier prolongé par une paroi (12) en porte à faux, et une face frontale (8) de forme rectangle identique, en ce que ce second boîtier (2) se positionne dans le logement (7) du premier boîtier (1), soit de manière que, dans une première position, la face frontale (8) de ce second boîtier (2) soit dans le plan d'une grande face (3) du premier bôitier en occupant complètement une ouverture du logement qui est prévue dans cette grande face (3) du premier boîtier (1), la face latérale (11) du second boîtier (2), venant fermer une ouverture du logement qui est prévue dans une petite face latérale du premier boîtier (1), soit de manière que, dans une seconde position, la face frontale (8) du second boîtier (2) occupe complètement l'ouverture du logement prévue dans la petite face latérale du premier boîtier (1), dans le plan de laquelle elle est alors située, la face latérale (11) du second boîtier (2) venant alors fermer l'ouverture du logement prévue dans la grande face (3) du premier boîtier (1), et en ce que lesdits moyens permettant de relier électriquement lesdits boîtiers (1, 2) permettent cette liaison électrique dans chacune desdites première et seconde positions relatives du second boîtier (2) par rapport au premier boîtier (1).

2. Appareil, selon la revendication 1, caractérisé ce que ladite seconde unité comporte en face frontale (8) dudit second boîtier (2) des éléments d'interface (9, 10) et de liaison électrique de l'appareil avec les utilisateurs, la première unité comportant les organes fonctionnels de l'appareil ainsi que les éléments permettant d'assurer la liaison électrique de celui-ci avec d'autres organes et/ou appareils placés à l'extérieur du premier boîtier (1), à l'exception des éléments de liaison électrique entre l'appareil et les utilisateurs que comporte la face frontale du second boîtier (2).

3. Appareil selon la revendication 1 ou 2, caractérisé en ce qu'il consiste en un relais radio.

## Patentansprüche

1. Elektronisches Gerät, dazu bestimmt, wahlweise entweder in Wandmontage oder in Gestellrahmenmontage verwendet zu werden, umfassend eine erste Einheit, die in einem ersten Gehäuse (1) enthalten ist, und eine zweite Einheit, die in einem zweiten Gehäuse (2) enthalten ist, wobei das Gerät von rechteckiger parallelepipedischer Form ist und die Einheiten trennbar und wieder zusammenfügbar sind, wobei das erste Gehäuse (1) eine Aufnahme (7) aufweist, die es ihm ermöglicht, das zweite Gehäuse (2) in herausnehmbarer Weise aufzunehmen, und diese Gehäuse (1, 2) mit Mitteln versehen sind, die ihre elektrische Verbindung gestatten, dadurch gekennzeichnet, daß das zweite Gehäuse (2) eine Seitenfläche (11), die gegebenenfalls von einer Seite des Gehäuses gebildet wird, welche durch eine überstehende Wand (12) verlängert wird, und eine Vorderseite (8) von identischer rechteckiger Form besitzt, daß sicn dieses zweite Gehäuse (2) in der Aufnahme (7) des ersten Gehäuses (1) anordnen läßt, und zwar entweder derart, daß sich in einer ersten Position die Vorderseite (8) dieses zweiten Gehäuses (2) in der Ebene einer großen Fläche (3) des ersten Gehäuses befindet, wobei sie eine Öffnung der Aufnahme vollständig ausfüllt, die in dieser großen Fläche (3) des ersten Gehäuses (1) vorgesehen ist, und die Seitenfläche (11) des zweiten Gehäuses (2) eine Öffnung der Aufnahme schließt, die in einer kleinen Seitenfläche des ersten Gehäuses (1) vorgesehen ist, oder derart, daß in einer zweiten Position die Vorderseite (8) des zweiten Gehäuses (2) die Öffnung der Aufnahme vollständig ausfüllt, die in der kleinen Seitenfläche des ersten Gehäuses (1) vorgesehen ist, in deren Ebene sie sich dann befindet, wobei dann die Seitenfläche (11) des zweiten Gehäuses (2) die Öffnung der Aufnahme schließt, die in der großen Fläche (3) des ersten Gehäuses (1) vorgesehen ist, und daß die Mittel, welche die elektrische Verbindung der Gehäuse (1, 2) gestatten, diese elektrische Verbindung in jeder der Relativpositionen, der ersten und der zweiten, des zweiten Gehäuses (2) in bezug auf das erste Gehäuse (1) ermöglichen.

2. Gerät nach Anspruch 1, dadurch gekennzeichnet, daß die zweite Einheit in der Vorderseite (8) des zweiten Gehäuses (2) Schnittstellenelemente (9, 10) und Elemente zur elektrischen Verbindung des Geräts mit den Benutzern aufweist, wobei die erste Einheit die funktionellen Organe des Geräts sowie die Elemente aufweist, welche die elektrische Verbindung desselben mit anderen Organen und/oder Geräten gestatten, die außerhalb des ersten Gehäuses (1) angeordnet sind, mit Ausnahme der Elemente zur elektrischen Verbindung zwischen dem Gerät und den Benutzern, welche die Vorderseite des zweiten Gehäuses (2) aufweist.

3. Gerät nach Anspruch 1 oder 2, dadurch gekennzeichnet, daß es aus einem Funkrelais besteht.

## Claims

1. Electronic apparatus designed to be used either wall-mounted or bay-mounted, as desired, said apparatus comprising two mutually separable and reassemblable units, namely a first unit contained in a first housing (1), and a second unit contained in a second housing (2), the apparatus being rectangular-block shaped, the first housing (1) having a recess (7) enabling it to receive the second housing (2) in removable manner, and said housings (1, 2) being provided with means enabling them to be connected together electrically, said apparatus being characterized in that the second housing (2) has a side face (11) optionally constituted by one side of the housing extended by a cantilevered-out wall (12), and a front face (8) of identical rectangular shape, in that said second housing (2) can be positioned in the recess (7) in the first housing (1) either in a first position in which the front face (8) of the second housing (2) is in the plane of a large face (3) of the first housing, thereby completely filling an opening of the recess that is provided in said large face (3) of the first housing (1), the side face (11) of the second housing (2) closing an opening of the recess that is provided in a small side face of the first housing (1), or else in a second position in which the front face (8) of the second housing (2) completely fills the opening of the recess that is provided in the small side face of the first housing (1), said front face then lying in the plane of said small side face, the side face (11) of the second housing (2) then closing the opening of the recess that is provided in the large face (3) of the first housing (1), and in that said means enabling said housings (1, 2) to be interconnected electrically enable the electrical interconnection to be performed in both said first position and said second position of the second housing (2) relative to the first housing (1).

2. Apparatus according to claim 1, characterized in that said second unit includes electrical connection and interface elements (9, 10) between the apparatus and users, which elements are disposed on the front face (8) of said second housing (2), and in that said first unit includes the functional members of the apparatus together with the elements enabling the apparatus to be electrically connected to other members and/or apparatuses placed outside the first housing (1), with the exception of the electrical connection elements provided on the front face of the second housing (2) between the apparatus and the users.

3. Apparatus according to claim 1 or 2, characterized in that it is constituted by a radio relay.
